# FASCICULE DE BREVET EUROPEEN

(11) **EP 2 519 461 B1**
(45) Date de publication et mention de la délivrance du brevet: **30.04.2014**
(21) Numéro de dépôt: 10808933.5
(22) Date de dépôt: 27.12.2010
(51) Int. Cl.: B65G 47/08, B65G 47/82

(54) **MACHINE DE GROUPAGE DE PRODUITS EN VUE DE LEUR ENCAISSAGE**
MASCHINE ZUR BILDUNG VON PRODUKTGRUPPEN FÜR IHRE VERKAPSELUNG
MACHINE FOR FORMING GROUPS OF PRODUCTS FOR THE CASING THEREOF

(30) Priorité: 30.12.2009 FR 0959663
(43) Date de publication de la demande: 07.11.2012
(73) Titulaire: Sidel Participations, 76930 Octeville sur Mer (FR)
(72) Inventeur: MOUGIN, Didier, F-76930 Octeville-sur-Mer (FR); DUCHEMIN, Guillaume, F-76930 Octeville-sur-Mer (FR); GATOS, David, F-76930 Octeville-sur-Mer (FR); GARNIER, Thierry, F-76930 Octeville-sur-Mer (FR)
(74) Mandataire: Cabinet Plasseraud
(86) Numéro de dépôt international: PCT/FR2010/052921
(87) Numéro de publication internationale: WO 2011/080481

(56) Documents cités:
- EP-A1- 1 052 200
- DE-A1-102004 015 969
- FR-A1- 2 918 359
- GB-A- 1 183 475

## Description

La présente invention concerne une machine de groupage de produits en vue de leur encaissage et, plus particulièrement, de produits du type bouteilles, flacons ou autres.

Le groupage de produits du type flacons, bouteilles, ou autres, en sortie d'une machine du genre étiqueteuse, par exemple, peut s'effectuer de différentes façons selon la forme et la nature des produits et aussi selon les cadences souhaitées.

Un premier exemple de machine de groupage est notamment décrit dans le document FR 2 918 359. Dans ce document, la machine de groupage comprend un convoyeur d'amenée des produits, lesquels produits sont disposés en ligne, à la queue leu leu et ils sont pris en charge par un dispositif collecteur, en forme de peigne, qui est disposé transversalement par rapport au sens longitudinal d'arrivée desdits produits.

Les produits sont captés par les alvéoles de ce collecteur qui est animé d'un mouvement en boucle pour réaliser, dans un premier temps, l'opération de capture des produits puis, dans un deuxième temps, l'opération de dépose du lot de produits captés sur une table qui s'étend sur le côté du convoyeur d'amenée, avant de revenir, dans un troisième temps, au point de départ, pour capturer le premier produit qui arrive avec ledit convoyeur d'amenée.

Pour réaliser l'opération de capture des produits, le collecteur est mobile en combinant deux mouvements : un mouvement transversal par rapport au sens d'arrivée des produits et un mouvement longitudinal parallèle à ce sens d'arrivée desdits produits.

Le mouvement longitudinal pour l'opération de capture des produits s'effectue selon un sens qui est inverse de celui du convoyeur d'amenée. Ce mouvement longitudinal d'avance permet au collecteur d'effectuer la capture des produits à la volée, en remontant la file desdits produits qui arrivent avec le convoyeur d'amenée ; cette remontée sur le convoyeur d'amenée permet audit convoyeur de prendre de l'avance et d'emmagasiner du temps pour réaliser la dépose des produits captés et effectuer le retour à la case départ avant de se présenter à nouveau face au premier produit qui arrive sur ledit convoyeur d'amenée.

Pour l'opération de transfert, le mouvement du collecteur est simplement transversal puis, après la dépose du lot des produits captés, le mouvement de recul est d'abord longitudinal, au moins le temps du largage du lot, et ensuite ce mouvement est transversal pour permettre audit collecteur de se repositionner au point de départ, devant le premier produit apporté par le convoyeur d'amenée.

Sur cette portion de retour au point de départ, la vitesse longitudinale du collecteur est suffisamment élevée pour dépasser le produit qui est en tête sur le convoyeur d'amenée et dont la vitesse d'avancement est continue.

La machine décrite dans ce document permet aussi de déposer le lot de produits captés soit d'un seul côté par rapport au convoyeur d'amenée, soit des deux côtés, ce qui permet d'obtenir des cadences de groupage relativement élevées.

Les tendances actuelles en matière de flexibilité et de cadences pour les machines de groupage de ce type imposent des contraintes auxquelles il devient de plus en plus difficile de faire face.

Tout d'abord, les mouvements combinés du collecteur pour mener à bien le processus de capture et de groupage des produits, sont relativement complexes : par ailleurs, pour la machine détaillée dans le document FR précité, on observe, entre deux séquences de capture, des temps morts qui sont relativement importants et qu'il est difficile de modifier alors que la cadence d'arrivée des produits-avec le convoyeur d'amenée est beaucoup plus facile à gérer et qu'elle peut bénéficier d'une vitesse uniforme qu'il est tentant d'augmenter pour améliorer les cadences.

Pour compenser les temps morts au niveau de la capture des produits, et conserver une cadence suffisante, il faut agir sur les vitesses et les accélérations du collecteur pendant la période où il est vide, notamment. Ces accélérations, si elles deviennent trop violentes, génèrent des vibrations qui peuvent nuire à la stabilité des produits qui sont sur la machine, ce qui peut provoquer des incidents.

Un autre type de machine de groupage, comme décrit dans le document EP 1 052 200, qui correspond au préambule de la revendication 1, permet de capturer des produits qui arrivent en ligne sur un convoyeur d'amenée. Les produits sont capturés au moyen d'une suite de trois collecteurs, en forme de peignes, qui se succèdent au poste de capture, devant l'arrivée des produits.

Ces trois collecteurs sont disposés au même niveau par rapport à l'arrivée des produits et ils sont fixés et entraînés au moyen d'un système comprenant deux chaînes sans fin qui sont décalées transversalement et qui sont chacune disposées dans un plan horizontal, lesquels plans sont décalés verticalement d'une hauteur qui est supérieure à la hauteur desdits collecteurs. Les collecteurs parcourent, en même temps, une boucle fermée au cours de laquelle chaque collecteur capte les produits qui arrivent, puis les dépose sur un tapis latéral d'évacuation, avant de revenir au point de départ en passant derrière les autres collecteurs qui font, eux aussi, le même circuit.

Les trois collecteurs sont liés entre eux, formant une noria ; leurs points de liaison sur les chaînes d'entraînement sont fixes et un écart existe en permanence entre deux collecteurs adjacents de sorte que, pour la capture des produits qui arrivent, il y a soit un arrêt des produits sur le convoyeur d'amenée, soit une gestion particulière de la vitesse et des accélérations des collecteurs.

La présente invention propose une machine de groupage de produits qui permet, notamment pour des cadences élevées, d'offrir la possibilité de réduire la vitesse des mouvements des collecteurs lorsqu'ils sont vides et de réduire les accélérations, ce qui a pour effet de limiter les vibrations de ces collecteurs et de la machine en général.

Les mouvements de chaque collecteur sont également simplifiés. Ainsi, pendant la phase de capture des produits, chaque collecteur est animé d'un simple mouvement transversal par rapport l'axe d'arrivée des produits ; il n'y a pas de mouvement longitudinal combiné de remontée de la file de produits comme c'est le cas dans le document FR précité et, par rapport au document EP précité, les produits peuvent conserver une vitesse uniforme entre le moment où ils sont séparés les uns des autres et le moment où ils sont pris en charge par les alvéoles d'un collecteur pour former le lot. Ces différents collecteurs, lorsqu'ils sont en action, donnent une impression de capture en continu ; ils forment une sorte de collecteur sans fin, ce qui permet de prévoir une arrivée régulière des produits, sans à coup, à vitesse uniforme.

La présente invention propose aussi une machine qui permet de répondre d'une manière quasiment universelle aux demandes actuelles en matière de flexibilité, de performances et surtout de sûreté de fonctionnement. Cette machine peut s'adapter facilement aux différents types de produits à regrouper, ainsi qu'à la dimension des lots de produits ; elle permet de gérer des cadences, de gérer la course de chaque collecteur pour l'adapter aux besoins ; elle permet ainsi d'optimiser les temps de formation des lots de produits.

La présente invention propose une machine qui présente une sorte de caractère universel car elle permet, en effet, de multiplier les modes opérationnels de capture des produits et elle offre aussi la possibilité de capter des produits de formes variées et, surtout, des produits dont la stabilité n'est pas la première qualité, du fait de leur taille et/ou de la position de leur centre de gravité, par exemple.

Cette stabilité des produits sur la machine peut aussi être affectée par plusieurs facteurs, comme les vitesses de déplacement et les accélérations, mais aussi par des facteurs qui dépendent de la nature des produits et des perturbations causées par le frottement, aussi bien sur le convoyeur d'amenée que sur la table d'accueil du lot de produits lorsqu'ils sont regroupés.

De plus, la machine selon l'invention présente un encombrement relativement modeste ; cette particularité facilite son intégration dans une chaîne de préparation et de conditionnement de produits comme, par exemple, une installation d'encaissage des produits dans des caisses de tous types, qu'il s'agisse d'une caisse du type "wrap-around" ou d'une caisse américaine classique.

La machine de groupage selon l'invention concerne des produits qui arrivent en ligne, espacés, sur un convoyeur d'amenée, laquelle machine comprend des collecteurs, en forme de peignes, disposés transversalement par rapport à l'axe longitudinal d'arrivée desdits produits, lesquels collecteurs sont animés d'un mouvement cyclique polygonal - pour capter, les uns à la suite des autres, lesdits produits, - pour les déplacer ensuite sur une table disposée latéralement où le lot de produits est pris en charge en vue de son encaissage, et - pour enfin revenir au point de départ, lesquels collecteurs sont décalés verticalement, reliés à des glissières qui sont disposées transversalement ; lesquelles glissières comportent, chacune, un chariot mobile qui porte, par l'intermédiaire d'un actionneur, un collecteur, lesquels chariots et actionneurs sont superposés et asservis au moyen d'un automate programmable pour commander ledit mouvement cyclique polygonal de chaque collecteur.

Toujours selon l'invention, la machine de groupage comporte des moyens pour contrôler la position des produits sur le convoyeur d'amenée, lesquels moyens sont constitués d'un capteur relié à l'automate, pour coordonner les mouvements des chariots et de leurs collecteurs avec la position desdits produits, au niveau du poste de capture.

Selon une autre disposition de l'invention, chaque collecteur est mobile dans un plan horizontal médian qui passe par l'axe de son actionneur.

Toujours selon l'invention, l'automate de commande des collecteurs comprend une interface de programmation offrant la possibilité de sélectionner un nombre de collecteur(s) adapté aux différents modes de regroupement et/ou au type de produits à regrouper.

Selon une autre disposition de l'invention, l'interface de programmation, offre la possibilité de sélectionner au moins un, deux, trois ou quatre collecteurs, ou des couples de collecteurs, ou encore de sélectionner un collecteur et un couple de collecteurs.

Toujours selon l'invention, chaque collecteur est constitué d'un ou de plusieurs peignes qui sont espacés et superposés, de façon à multiplier les contacts avec les produits pour améliorer leur stabilité pendant leur transfert entre le convoyeur d'amenée et le poste de dépose sur la table d'accueil.

Selon une autre disposition de l'invention, le collecteur comporte des alvéoles dont la profondeur permet d'accueillir un ou plusieurs produits en vue de leur regroupement sous la forme d'un lot.

Toujours selon l'invention, dans le cas de produits à regrouper dont la section n'est pas circulaire, du type flacon de section ovoïde, chaque collecteur comporte des alvéoles qui sont disposées en oblique par rapport à l'axe longitudinal du convoyeur d'amenée, l'axe desdites alvéoles faisant un angle a non nul avec l'axe longitudinal du convoyeur d'amenée, ledit angle étant compris entre 10 et 45°, par exemple.

Selon une autre disposition de l'invention, dans le cas de collecteurs à alvéoles disposées en obliques, les actionneurs sont également orientés en oblique, parallèlement à l'axe desdites alvéoles pour permettre le largage du lot de produits sans bousculer ces derniers.

Toujours selon l'invention, la machine de groupage comporte au moins un robot de prise en charge des produits, ledit robot étant aménagé avec une tête de préhension capable de prélever au moins un lot de produits au poste de dépose, en vue de leur encaissage, ledit robot permettant également d'effectuer un regroupement de chaque lot déposé par le collecteur, en vue de former un lot global constitué d'un nombre de produits susceptibles de remplir directement une caisse.

Selon une autre disposition de l'invention, la machine de groupage comporte une table d'accueil qui est constituée d'un plan fixe sur lequel les produits captés par chaque collecteur prennent place au fur et à mesure de leur déplacement avec ledit collecteur, lequel plan fixe comporte, au niveau du poste de dépose, un aménagement du type bossage ou dos d'âne, par exemple, pour retenir le lot de produits captés lors du mouvement de recul dudit collecteur, c'est-à-dire au moment du largage desdits produits audit poste de dépose.

Toujours selon l'invention, dans le cas d'un encaissage du lot de produits dans une découpe du type "wrap-around" la machine de groupage comporte, associé à un robot ou autre, un dispositif poussoir qui permet un simple transfert transversal dudit lot de produit vers un convoyeur d'encaissage sur lequel est installée ladite découpe et qui est disposé en bordure du poste de dépose.

Pour pouvoir être exécutée, l'invention est exposée de façon suffisamment claire et complète dans la description suivante qui, en plus, est accompagnée de dessins dans lesquels :
- la figure 1 est une élévation schématique d'un premier mode de réalisation de la machine selon l'invention, comportant trois collecteurs superposés ;
- la figure 2 est une vue schématique de dessus de la machine représentée figure 1 ;
- la figure 3 est une élévation schématique d'une machine selon un second mode de réalisation, laquelle machine comporte quatre collecteurs superposés ;
- la figure 4 montre la machine selon le second mode de réalisation dans une configuration où les collecteurs sont associés pour former des couples en vue d'effectuer un groupage de produits dont la stabilité est médiocre, par exemple ;
- la figure 5 représente le cheminement d'un collecteur pour réaliser un groupage des produits ordinaires ;
- la figure 6 représente, en traits forts, un collecteur qui permet de réaliser un groupage de produits dont la section n'est pas circulaire, c'est-à-dire de produits du genre flacons à section ovoïde, par exemple, lequel groupage s'effectue selon une configuration dite « en épis », et elle représente, en traits mixtes fins, un collecteur adjacent pour montrer que l'entraxe entre les alvéoles de deux collecteurs adjacents est identique à celui des alvéoles du collecteur lui-même ;
- la figure 7 est une vue de côté d'un collecteur constitué de deux peignes superposés ;
- la figure 8 représente le cheminement d'un collecteur dans le cas d'une capture des produits avec un collecteur dont les alvéoles sont disposées en oblique pour réaliser un groupage des produits selon une répartition en épis.

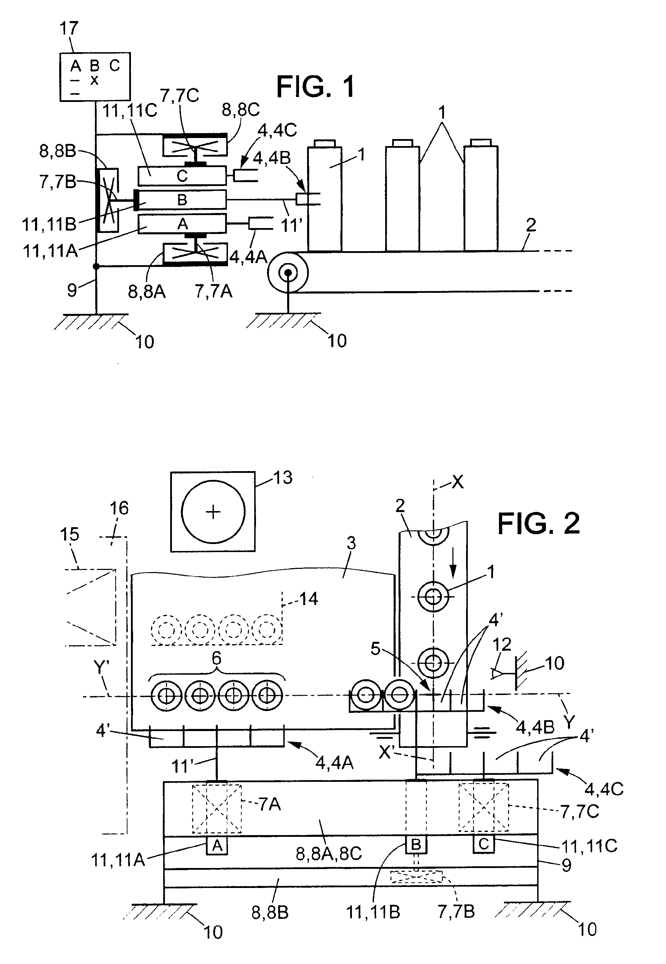

Les figures 1 et 2 montrent des produits 1 disposés sur un convoyeur 2 d'amenée. Ces produits 1 arrivent à la queue leu leu, sur une file, selon un axe longitudinal xx', et ils sont, de préférence, régulièrement espacés, par des moyens appropriés, non représentés, situés en amont. Ces produits 1 arrivent de façon unitaire mais ils peuvent également, selon le type de produits, arriver sous une forme où ils sont déjà regroupés, préparés par lots et même, selon le cas, sous la forme d'un lot emballé au moyen d'un film thermoplastique rétractable.

Le convoyeur 2 d'amenée des produits est associé, latéralement, à une table 3. Cette table 3 d'accueil se situe dans le même plan horizontal que le plan du convoyeur 2 d'amenée des produits 1, pour recevoir lesdits produits 1 avant leur encaissage.

Cette table 3 se présente sous la forme d'un simple plan fixe sur lequel les produits 1 peuvent glisser ; elle peut également être constituée d'un tapis qui, en fonction des besoins, déplace les produits 1.

Les produits 1 sont captés sur le convoyeur 2 d'amenée, à son extrémité aval, par exemple, par une suite de collecteurs 4 qui présentent la particularité de se situer à des niveaux différents ; les différents collecteurs 4 sont décalés verticalement les uns par rapport aux autres. Ces différents collecteurs 4, repérés au moyen des lettres A, B et C, figures 1 et 2, prélèvent, les uns à la suite des autres, les produits 1 qui sont disposés sur le convoyeur 2 d'amenée. Ces produits 1 sont captés sur le convoyeur 2 d'amenée au niveau d'un poste 5 de capture qui est repéré par une croix.

Chaque collecteur 4 se présente sous la forme d'un peigne rectiligne, muni de dents qui délimitent plusieurs alvéoles 4', et qui sont parallèles à l'axe longitudinal xx'. Les formes et les dimensions desdites alvéoles 4' sont en rapport avec les produits 1 à capter. Les collecteurs 4 installés sur la machine forment une sorte de noria, c'est-à-dire que lesdits collecteurs 4 se présentent les uns à la suite des autres, au niveau du poste 5 de capture, en bout du convoyeur 2 d'amenée des produits 1, pour capter ces derniers au fur et à mesure de leur arrivée.

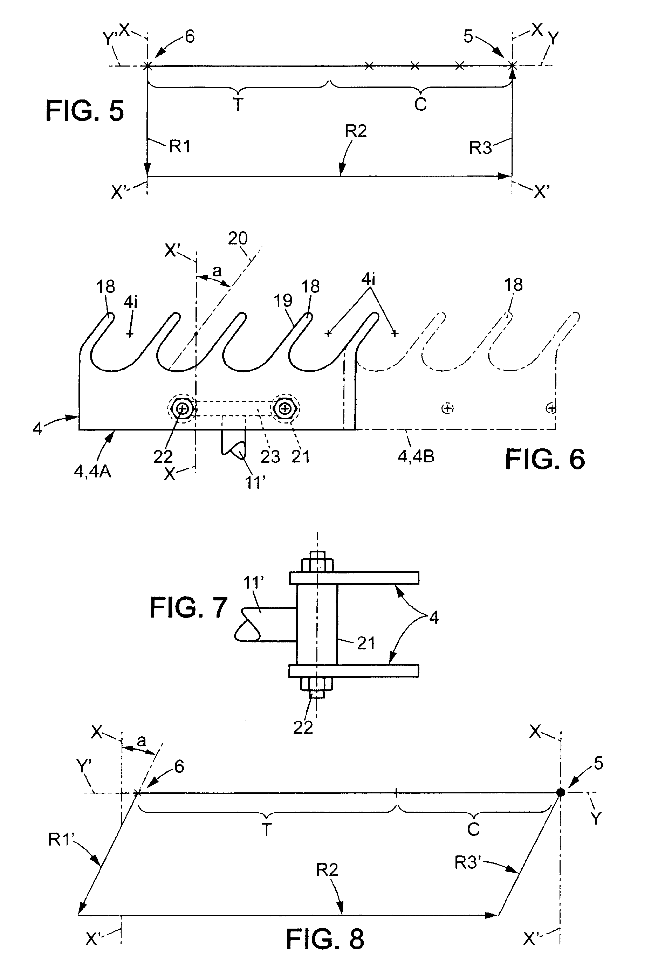

Pour réaliser l'opération de capture des produits 1, les collecteurs 4 se présentent au poste 5 les uns à la suite des autres, formant une sorte de collecteur sans fin, comme détaillé plus loin en liaison avec la figure 6. Cette opération de capture s'effectue à une vitesse qui est en relation avec la vitesse du convoyeur 2 d'amenée.

En dehors de l'opération de capture où ils sont l'un derrière l'autre, décalés verticalement, sans jeu horizontal entre eux, chaque collecteur 4 évolue en solitaire pour larguer son lot de produits 1 au niveau d'un poste 6 de dépose et, ensuite, pour retourner à la case départ et pour se positionner de nouveau à la suite du collecteur 4 précédent qui est en fin de position active de prise en charge des produits 1, au niveau du poste 5 de capture, là où lesdits produits sont apportés par le convoyeur 2 d'amenée.

Chaque collecteur 4 est porté par un chariot 7 qui est mobile transversalement par rapport au convoyeur 2 d'amenée des produits 1, c'est-à-dire mobile selon un mouvement qui est perpendiculaire à l'axe longitudinal xx'.

Chaque chariot 7 est guidé au moyen d'un système de glissières 8, par exemple, lesquelles glissières 8 sont superposées, disposées transversalement et elles sont parallèles entre elles. Ces glissières 8 sont portées par une structure 9 qui est solidaire du bâti 10 général de la machine, et elles sont parallèles entre elles.

Les différents chariots 7, repérés avec les lettres A, B et C, figures 1 et 2, sont donc disposés, comme les collecteurs 4, à des niveaux différents par rapport au poste 5 de capture des produits 1, en bout du convoyeur 2 d'amenée, lesquels chariots 7 sont mobiles transversalement sous l'effet d'organes d'actionnement appropriés, non représentés, du genre servomoteur avec réducteur et courroie crantée, par exemple.

Chaque chariot 7 porte un collecteur 4 par l'intermédiaire d'un dispositif actionneur qui est constitué, par exemple, d'un vérin 11, ou de plusieurs vérins selon les besoins ; la tige dudit vérin 11 fait office de bras 11' pour porter le collecteur 4 auquel il est associé.

Dans l'exemple de réalisation de la figure 2, ces actionneurs 11 sont disposés parallèlement à l'axe longitudinal xx' pour déplacer les collecteurs 4 entre une position de capture des produits 1 et une position en retrait qui leur permet de revenir à la case départ, c'est-à-dire au niveau du poste 5 de capture, après le largage desdits produits 1 au niveau du poste 6 de dépose qui se situe sur la table 3 d'accueil.

Sur la figure 1 et, figure 2, les actionneurs 11 sont aussi repérés par les lettres A, B et C, comme les collecteurs 4, ainsi que les chariots 7 et les glissières 8.

Toujours sur les figures 1 et 2, le collecteur 4B est en position active de capture des produits 1, alors que le collecteur 4A est dans une position intermédiaire, en cours de recul, après avoir déposé son lot de produits 1 au poste 6 de dépose, sur la table 3 d'accueil. Le collecteur 4C est en position inactive, en attente, pour se substituer et prendre la suite du collecteur 4B lorsque ce dernier sera garni avec son lot de produits 1.

Ces trois collecteurs 4 forment donc une sorte de noria pour prélever les produits 1 au niveau du poste 5 de capture et ensuite pour apporter ce lot de produits 1 au niveau du poste 6 de dépose.

Le mouvement des collecteurs 4 entre les deux postes 5 et 6 s'effectue en suivant un chemin qui est rectiligne et qui correspond à l'axe transversal yy', lequel axe yy' est perpendiculaire à l'axe longitudinal xx'.

De façon préférentielle, la capture des produits 1 s'effectue sous le contrôle d'un capteur 12, visible sur la figure 2, qui détecte le passage d'un produit 1 et permet, par l'intermédiaire d'un automate dont il sera question plus loin, de connaître la distance dudit produit 1 par rapport au collecteur 4 affecté à la capture de ce produit 1 qui arrive sur le convoyeur 2 d'amenée, en fonction aussi de la vitesse dudit convoyeur 2. Ce capteur 12 est positionné latéralement, sur un côté du convoyeur 2, le côté qui est opposé à la table 3 d'accueil, et il se situe en amont de la position des collecteurs 4 lorsqu'ils sont en position de capture.

Les collecteurs 4 sont constitués, de préférence, de peignes qui sont fixés de façon à être amovibles par rapport aux bras 11' des actionneurs 11 pour pouvoir être changés facilement afin de mettre en rapport la forme des alvéoles de ces peignes avec la section des produits 1 à regrouper.

Chaque peigne de collecteur 4 peut se présenter, par exemple, sous la forme d'une plaque en matériau thermoplastique avec des alvéoles qui ont une forme qui correspond le plus fidèlement possible à celle des produits à capter.

Ces alvéoles, figure 2, sont centrées sur un axe qui est parallèle à l'axe longitudinal xx' du convoyeur 2 d'amenée des produits et leur dimension longitudinale, ou profondeur, peut aussi varier selon que l'on souhaite capter un ou deux produits 1 ou plus, dans le sens longitudinal en particulier. Les produits captés peuvent également se présenter sous la forme d'un lot de produits 1 déjà regroupés en rang et même emballés sous film plastique.

Au poste 6 de dépose, le lot de produits 1 est pris en charge par des moyens appropriés comme, par exemple, un robot 13, schématisé figure 2, qui comporte une tête 14 de manipulation, laquelle tête peut se présenter sous la forme d'un simple poussoir chargé de déplacer le lot de produits 1 dans une caisse 15 du type "wrap-around" qui est disposée sur un convoyeur 16 d'encaissage, lequel convoyeur 16 s'étend latéralement le long de la table 3 d'accueil.

Le robot 13 peut également intervenir avec une tête 14 de manipulation appropriée pour effectuer un regroupement, sur la table 3 d'accueil, de plusieurs lots de produits 1 captés par les différents collecteurs 4 afin de former un lot global dont le nombre de produits correspond au nombre de produits susceptibles de remplir la caisse 15 disposée sur le convoyeur 16 d'encaissage.

Cette machine de groupage, schématisée figure 1 et figure 2, présente aussi l'avantage de pouvoir fonctionner de différentes façons, comme détaillé également plus loin pour une variante de réalisation. Elle peut fonctionner, en mode dégradé par exemple, avec un seul collecteur 4 ; elle peut également fonctionner avec deux collecteurs seulement ou avec trois collecteurs et elle peut aussi fonctionner avec un couple de collecteurs 4A et 4C regroupés, ledit couple étant associé avec le collecteur 4B simple. Cette composition particulière des différents collecteurs 4 (un collecteur plus un couple de collecteurs) peut, pour certains produits 1, améliorer leur stabilité lors de leur manipulation en imposant une préhension desdits produits 1 au niveau d'une zone privilégiée, sur la hauteur desdits produits 1.

La machine peut comporter un automate 17 muni d'une interface de programmation qui permet de sélectionner le mode de capture des produits, c'est-à-dire de sélectionner soit l'ensemble des collecteurs 4, soit un ou deux collecteurs 4 ou encore une composition de collecteurs 4.

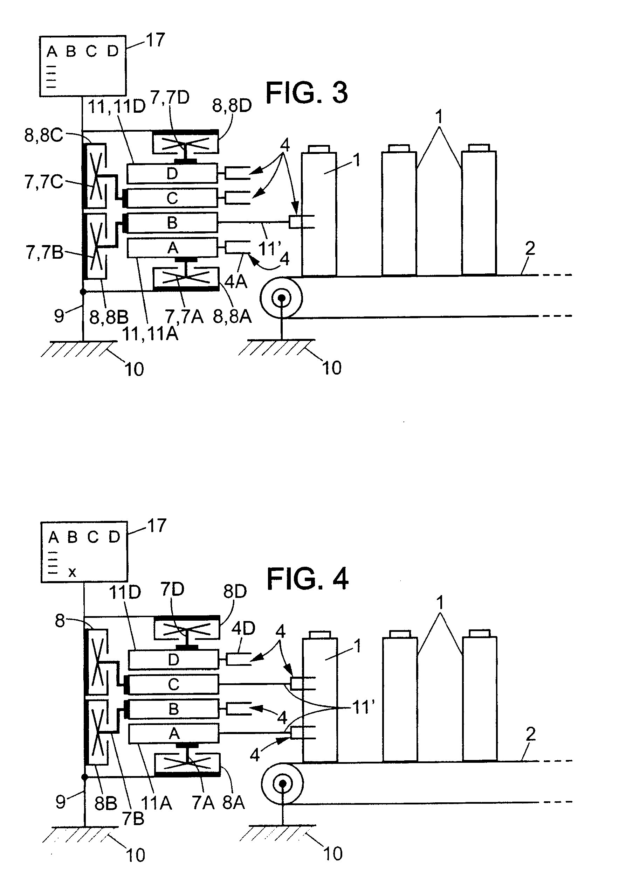

Les figures 3 et 4 représentent, schématiquement, une machine de groupage qui comprend quatre collecteurs 4 qui sont décalés verticalement les uns par rapport aux autres. Ces différents collecteurs 4, repérés avec les lettres A, B, C et D, sont respectivement portés, comme précédemment, par des chariots 7, repérés également avec les lettres A à D, par l'intermédiaire d'actionneurs 11, repérés par A à D.

Les chariots 7 sont guidés et ils sont mobiles sur des glissières 8 repérées avec les lettres A à D, lesquelles glissières 8 sont superposées, parallèles entre elles et disposées transversalement par rapport à l'axe longitudinal xx'. Les glissières 8 sont portées, chacune, comme précédemment, par une structure 9 qui est solidaire du bâti 10 général de la machine.

Là encore, un automate 17, programmable, comportant une interface appropriée, permet de sélectionner les collecteurs 4 à utiliser, pour capter les produits 1 en fonction de la taille de ces produits 1, par exemple, et également en fonction des cadences d'arrivée de ces produits.

Parmi les différents modes de capture des produits 1, on peut citer, comme précédemment, plusieurs modes d'utilisation des différents collecteurs 4. La machine peut, bien évidemment, fonctionner en mode dégradé avec un seul collecteur 4. Son fonctionnement normal s'effectue avec au moins deux collecteurs 4 qui forment une noria, c'est-à-dire que, au poste 5 de capture, les collecteurs 4 interviennent les uns à la suite des autres, avec un pas constant entre deux alvéoles consécutives de collecteurs 4 qui se suivent, donnant l'impression d'un système de collecte sans fin. Les produits 1 captés sont ensuite portés sur la table 3 d'accueil, au poste 6 de dépose, où ils forment un lot qui est ensuite récupéré par la tête 14 du robot 13.

Un autre mode de capture, comme représenté figures 3 et 4, peut consister, par exemple, à utiliser les collecteurs 4 en les groupant par couples. Ce fonctionnent simultané des couples de collecteurs 4 permet, là aussi, de capter des produits 1 de grande taille qui sont, par nature, plutôt instables. Dans ces conditions, la machine fonctionne comme si elle disposait de deux collecteurs 4 seulement, sans que ce mode de fonctionnement soit forcément considéré comme un mode de fonctionnement dégradé.

La figure 5 illustre le mouvement de l'un des collecteurs 4, selon un cycle fermé. Tous les collecteurs 4 effectuent le même mouvement, en boucle, qui correspond à un cycle dit « carré » et dont la forme est d'ailleurs plutôt rectangulaire.

Le mouvement du collecteur 4 commence avec la capture, au poste 5, du premier produit 1 et ce mouvement se poursuit ensuite pas à pas, le temps de remplir toutes les alvéoles 4' dudit collecteur 4. Dès que le collecteur 4 est garni avec les produits 1, un autre collecteur 4 prend la suite et, pendant ce temps-là, le collecteur 4 garni transfère son lot de produits 1 captés au niveau du poste 6 de dépose.

Toute cette phase de capture au poste 5, repérée C, et la phase transfert au poste 6, repérée T, s'effectuent selon un mouvement transversal, perpendiculaire à l'axe longitudinal xx'.

Ensuite, après le largage des produits au poste 6, le collecteur 4 est déplacé selon un mouvement qui comprend : - une première portion repérée R1, laquelle portion R1 est, par exemple, parallèle à l'axe longitudinal xx' du convoyeur 2 d'amenée pour effectuer un mouvement de recul qui permet, en même temps, de larguer le lot de produits 1 au poste 6 de dépose, puis - une deuxième portion R2 pour un mouvement transversal et enfin, - une troisième portion R3 pour un mouvement d'avance cette fois, qui ramène le collecteur 4 au niveau de la case départ, c'est-à-dire au poste 5 de capture des produits 1. Lors de ce retour au point de départ, sur la portion R2, les collecteurs 4 se croisent.

Dans ce mode de réalisation détaillé figures 1 à 5, chaque actionneur 11 est orienté parallèlement à l'axe longitudinal xx', c'est-à-dire parallèlement à l'axe d'arrivée des produits 1.

La figure 6 représente un collecteur 4 en forme de peigne qui est aménagé pour accueillir des produits dont la section n'est pas circulaire, et en particulier des produits du genre flacons de section ovoïde, par exemple.

Ces produits 1 de type ovoïde sont regroupés pour former un lot qui se présente selon une configuration particulière dite « en épis ».

Le collecteur 4, représenté figure 6, comporte des alvéoles 4i qui sont disposées en oblique par rapport à l'axe longitudinal xx'. Cette disposition permet d'orienter directement les produits 1 selon une direction qui va permettre de livrer directement le lot dans cette configuration dite « en épis ».

L'orientation des produits 1 se fait automatiquement lors de leur introduction dans l'alvéole 4i qui leur est allouée. En effet, chaque produit 1 pénètre dans l'alvéole 4i à une certaine vitesse, et en particulier à une vitesse qui correspond à la vitesse du convoyeur 2 d'amenée, et cette vitesse est suffisante pour faire pivoter le produit 1 au contact de la dent 18 et, en particulier, de la paroi 19 qui délimite un côté de l'alvéole 4i.

L'angle a, qui correspond, comme représenté figure 6, à l'angle d'inclinaison de l'axe 20 des alvéoles 4i avec l'axe longitudinal xx', est compris entre 10 et 45°, par exemple.

La figure 7 montre, vu de côté, un collecteur 4 constitué de deux peignes qui sont espacés au moyen d'une paire d'entretoises 21 et assemblés par les vis 22. La présence de deux peignes superposés permet d'améliorer la stabilité des produits captés par ce type de collecteur 4. Ces deux peignes sont solidaires du bras 11' par l'intermédiaire des entretoises 21 et, par exemple, d'une entretoise 23 qui s'étend entre lesdites entretoises 21.

La figure 8 illustre le cheminement en boucle des collecteurs 4 du type à alvéoles 4i obliques, pour des produits 1 qui sont regroupés en épis.

Ces collecteurs 4 fonctionnent de la même façon, selon un cycle polygonal fermé, avec une particularité liée au mouvement de ces collecteurs 4, lors du largage des produits 1 au poste 6 de dépose.

En effet, le collecteur 4 libère les produits 1 au niveau du poste 6 de dépose, sur la table 3 d'accueil, en effectuant un mouvement de recul selon une direction qui est en oblique par rapport à l'axe xx'.

Le mouvement de chaque collecteur 4 commence par la prise en charge, au poste 5 de capture, des produits 1 qui arrivent sur le convoyeur 2 d'amenée et cette prise en charge s'accompagne d'un mouvement transversal, pas à pas, qui est repéré C sur cette figure 8.

Le mouvement C de capture et le mouvement de transfert suivant, repéré T, s'effectuent selon un mouvement transversal, perpendiculaire à l'axe longitudinal xx'. Le mouvement de transfert se termine au poste 6 de dépose où le lot de produits 1 est lâché par le collecteur 4 correspondant.

Le collecteur 4 effectue ensuite un mouvement de recul selon une direction dont l'orientation correspond à celle des alvéoles 4i pour éviter de déplacer ou de bousculer les produits 1 positionnés dans lesdites alvéoles 4i.

Ainsi, comme représenté figure 8, le mouvement de recul du collecteur 4 s'étend sur un segment R1' rectiligne qui est parallèle à l'axe 20 des alvéoles 4i.

Ce mouvement de recul du colleteur 4, après le largage du lot au poste 6 de dépose implique de disposer d'un actionneur 11 qui est orienté comme l'axe 20 des alvéoles 4i, pour réaliser un déplacement rectiligne comme indiqué par le segment R1'. L'actionneur 11 de chaque collecteur 4 fait donc un angle compris entre 10 et 45°, environ, avec l'axe longitudinal xx'.

Après le mouvement de recul, le collecteur 4 se déplace selon un segment R2 transversal et le mouvement suivant s'effectue selon un segment R3' qui peut être parallèle, lui aussi, à l'axe 20 des alvéoles 4i. Ce dernier mouvement permet de replacer le collecteur 4 au niveau du point de départ, c'est-à-dire au poste 5 de capture, à la suite du collecteur 4 précédent qui termine cette prise en charge.

La figure 6 montre les collecteurs 4 qui sont aménagées pour fonctionner comme une sorte de collecteur sans fin au niveau du poste 5 de capture. La superposition des dents 18 situées aux extrémités de deux collecteurs 4 adjacents, au poste 5 de capture, permet en effet de conserver, en permanence, un même intervalle entre deux alvéoles consécutives de collecteurs différents, qu'il s'agisse des alvéoles 4i des collecteurs 4 représentés figure 6 ou des alvéoles 4' pour les collecteurs 4 qui sont représentés figure 2.

## Revendications

1. Machine de groupage de produits comprenant un convoyeur (2) d'amenée, sur lequel lesdits produits arrivent en ligne, espacés, laquelle machine comprend des collecteurs (4), en forme de peignes, disposés transversalement par rapport à l'axe longitudinal (xx') d'arrivée des produits (1), lesquels collecteurs (4) sont animés d'un mouvement cyclique polygonal - pour capter, les uns à la suite des autres, lesdits produits, - pour ensuite les déplacer sur une table (3) disposée latéralement où le lot de produits est pris en charge en vue de son encaissage, et - pour, enfin, revenir au point de départ,
**caractérisée en ce que** lesdits collecteurs (4) sont décalés verticalement, reliés à des glissières (8) qui sont disposées transversalement par rapport audit axe longitudinal (xx'), lesquelles glissières (8) comportent, chacune, un chariot (7) mobile qui porte, par l'intermédiaire d'un actionneur (11), un collecteur (4), lesquels chariots (7) et actionneurs (11) sont superposés et asservis au moyen d'un automate (17) programmable pour commander ledit mouvement cyclique polygonal de chaque collecteur (4).

2. Machine de groupage selon la revendication 1, **caractérisée en ce qu'**elle comporte des moyens de contrôle de la position des produits (1) sur le convoyeur (2) d'amenée, lesquels moyens sont constitués d'un capteur (12) relié à l'automate (17), pour coordonner les mouvements des chariots (7) et de leurs collecteurs (4) avec la position desdits produits, au niveau du poste (5) de capture.

3. Machine de groupage selon la revendication 1, **caractérisée en ce que** chaque collecteur (4) est mobile dans un plan horizontal médian qui passe par l'axe de son actionneur (11).

4. Machine de groupage selon la revendication 1, **caractérisée en ce que** l'automate (17) de commande des collecteurs (4) comprend une interface de programmation offrant la possibilité de sélectionner un nombre de collecteur ( s ) (4) adapté aux différents modes de regroupement et/ou aux types de produits (1) à regrouper.

5. Machine de groupage selon la revendication 1, **caractérisée en ce que** l'interface de programmation, offre la possibilité de sélectionner au moins un, deux, trois ou quatre collecteurs (4), ou des couples de collecteurs (4), ou encore de sélectionner un collecteur (4) et un couple de collecteurs ( 4 ).

6. Machine de groupage selon la revendication 1, **caractérisée en ce que** chaque collecteur (4) est constitué d'un ou de plusieurs peignes qui sont espacés et superposés, de façon à multiplier les contacts avec les produits (1) pour améliorer leur stabilité pendant leur transfert entre le convoyeur (2) d'amenée et le poste (6) de dépose sur la table (3) d'accueil.

7. Machine de groupage selon la revendication 1, **caractérisée en ce que** le collecteur (4) comporte des alvéoles dont la profondeur permet d'accueillir un ou plusieurs produits en vue de leur regroupement sous la forme d'un lot.

8. Machine de groupage selon la revendication 1, **caractérisée en ce que**, pour le regroupage de produits (1) dont la section n'est pas circulaire, du type flacon de section ovoïde, chaque collecteur (4) comporte des alvéoles (4i) qui sont disposées en oblique par rapport à l'axe longitudinal (xx') du convoyeur (2) d'amenée, l'axe (20) desdites alvéoles (4i) faisant un angle (a) non nul avec l'axe longitudinal (xx') du convoyeur (2) d'amenée, ledit angle étant compris entre 10 et 45[deg.], par exemple.

9. Machine de groupage selon la revendication 8, **caractérisée en ce que**, dans le cas de collecteurs (4) à alvéoles (4i) obliques, les actionneurs (11) sont orientés en oblique, parallèlement à l'axe (20) desdits alvéoles pour permettre le largage du lot de produits (1) sans bousculer ces derniers.

10. Machine de groupage selon la revendication 1, **caractérisée en ce qu'**elle comporte au moins un robot (13) de prise en charge des produits (1), ledit robot (13) étant aménagé avec une tête (14) de préhension capable de prélever au moins un lot de produits (1) au poste (6) de dépose, en vue de leur encaissage, ledit robot (13) permettant également d'effectuer un regroupement de chaque lot déposé par le collecteur (4), en vue de former un lot global constitué d'un nombre de produits (1) susceptibles de remplir directement une caisse.

11. Machine de groupage selon la revendication 1, **caractérisée en ce qu'**elle comporte une table (3) d'accueil qui est constituée d'un plan fixe sur lequel les produits (1) captés par chaque collecteur (4) prennent place au fur et à mesure de leur déplacement avec ledit collecteur (4), lequel plan fixe comporte, au niveau du poste (6) de dépose, un aménagement du type bossage ou dos d'âne, par exemple, pour retenir le lot de produits (1) captés lors du mouvement de recul dudit collecteur (4), c'est-à-dire au moment du largage desdits produits (1) audit poste (6) de dépose.

12. Machine de groupage selon la revendication 1, **caractérisée en ce que**, dans le cas d'un encaissage du lot de produits (1) dans une découpe du type "wrap-around" la machine comporte, associé à un robot (13) ou autre, un dispositif poussoir (14) qui permet un simple transfert transversal dudit lot de produits (1) vers un convoyeur (16) d'encaissage sur lequel est installée ladite découpe et qui est disposé en bordure du poste (6) de dépose.

## Patentansprüche

1. Maschine zur Bildung von Produktgruppen, umfassend einen Zuführungsförderer (2), auf dem die Produkte in einer Reihe voneinander beabstandet ankommen, wobei die Maschine kammförmige Sammler (4) umfasst, die quer zur Längsachse (xx') der Ankunft der Produkte (1) angeordnet sind, wobei die Sammler (4) in einer zyklischen polygonalen Bewegung angetrieben werden, - um die Produkte eines nach dem anderen aufzunehmen, - um sie anschließend auf einen seitlich angeordneten Tisch (3) zu bewegen, wo die Produktcharge für ihre Verpackung entgegengenommen wird, und - um schließlich zum Ausgangspunkt zurückzukehren, **dadurch gekennzeichnet, dass** die Sammler (4) vertikal versetzt und mit quer zur Längsachse (xx') angeordneten Schienen verbunden sind, wobei die Schienen (8) jeweils einen beweglichen Wagen (7) aufweisen, der über ein Stellglied (11) einen Sammler (4) trägt, wobei die Wagen (7) und Stellglieder (11) übereinanderliegen und mit Hilfe eines Automaten (17) geregelt werden, der zur Steuerung der zyklischen polygonalen Bewegung jedes Sammlers (4) programmierbar ist.

2. Maschine zur Gruppenbildung nach Anspruch 1,
**dadurch gekennzeichnet, dass** sie Mittel zur Kontrolle der Position der Produkte (1) auf dem Zuführungsförderer (2) aufweist, wobei die Mittel aus einem mit dem Automaten (17) verbundenen Sensor (12) ausgebildet sind, um die Bewegungen der Wagen (7) und ihrer Sammler (4) mit der Produktposition in Höhe der Aufnahmestation (5) zu koordinieren.

3. Maschine zur Gruppenbildung nach Anspruch 1,
**dadurch gekennzeichnet, dass** jeder Sammler (4) in einer horizontalen Mittelebene, die durch die Achse seines Stellglieds (11) verläuft, beweglich ist.

4. Maschine zur Gruppenbildung nach Anspruch 1,
**dadurch gekennzeichnet, dass** der Automat (17) zur Steuerung der Sammler (4) eine Programmierungsschnittstelle umfasst, welche die Möglichkeit bietet, eine Anzahl an Sammler(n) (4) auszuwählen, die für die verschiedenen Gruppenbildungsmodi und/oder Arten der zu gruppierenden Produkte (1) angemessen ist.

5. Maschine zur Gruppenbildung nach Anspruch 1,
**dadurch gekennzeichnet, dass** die Programmierungsschnittstelle die Möglichkeit bietet, zumindest einen, zwei, drei oder vier Sammler (4) oder Paare von Sammlern (4) auszuwählen oder aber einen Sammler (4) und ein Paar von Sammlern (4) auszuwählen.

6. Maschine zur Gruppenbildung nach Anspruch 1,
**dadurch gekennzeichnet, dass** jeder Sammler (4) aus einem oder mehreren Kämmen gebildet ist, die voneinander beabstandet sind und übereinanderliegen, sodass die Kontakte mit den Produkten (1) vervielfacht werden, um deren Stabilität während ihres Transports zwischen dem Zuführungsförderer (2) und der Station (6) zur Ablage auf dem Aufnahmetisch (3) zu verbessern.

7. Maschine zur Gruppenbildung nach Anspruch 1,
**dadurch gekennzeichnet, dass** der Sammler (4) Zellen aufweist, deren Tiefe die Aufnahme eines oder mehrerer Produkte für deren Gruppierung in Form einer Charge ermöglicht.

8. Maschine zur Gruppenbildung nach Anspruch 1,
**dadurch gekennzeichnet, dass** zur Bildung von Gruppen aus Produkten (1) mit unrundem Querschnitt, von der Art einer Flasche mit eiförmigem Querschnitt, jeder Sammler (4) Zellen (4i) aufweist, die schräg zur Längsachse (xx) des Zuführungsförderers (2) angeordnet sind, wobei die Achse (20) der Zellen (4i) mit der Längsachse (xx) des Zuführungsförderers (2) einen Winkel (a) bildet, der ungleich null ist, wobei der Winkel beispielsweise 10° bis 45° beträgt.

9. Maschine zur Gruppenbildung nach Anspruch 8,
**dadurch gekennzeichnet, dass** im Fall von Sammlern (4) mit schrägen Zellen (4i) die Stellglieder (11) schräg, parallel zur Achse (20) der Zellen, ausgerichtet sind, um den Abwurf der Charge von Produkten (1) zu ermöglichen, ohne Letztere durcheinanderzubringen.

10. Maschine zur Gruppenbildung nach Anspruch 1,
**dadurch gekennzeichnet, dass** sie zumindest einen Roboter (13) zur Entgegennahme der Produkte (1) aufweist, wobei der Roboter (13) mit einem Entnahmekopf (14) ausgestattet ist, der an der Ablagestation (6)zumindest eine Charge von Produkten (1) für deren Verpackung entnehmen kann, wobei der Roboter es ferner ermöglicht, eine Gruppierung vom Sammler (4) abgelegten jeder Charge auszuführen, um eine Gesamtcharge auszubilden, die aus einer Anzahl von Produkten gebildet ist, die unmittelbar eine Kiste füllen können.

11. Maschine zur Gruppenbildung nach Anspruch 1,
**dadurch gekennzeichnet, dass** sie einen Aufnahmetisch (3) aufweist, der aus einer festen Ebene gebildet ist, auf der die von jedem Sammler (4) aufgenommenen Produkte (1) im Zuge ihrer seitlichen Bewegung mit dem Sammler (4) abgelegt werden, wobei die feste Ebene in Höhe der Ablagestation (6) eine beispielsweise buckel- oder schwellenartige Einrichtung aufweist, um die Charge von aufgenommenen Produkten (1) bei der Rückzugsbewegung des Sammlers (4), d. h. im Moment des Abwurfs der Produkte (1) an der Ablagestation (6), zurückzuhalten.

12. Maschine zur Gruppenbildung nach Anspruch 1,
**dadurch gekennzeichnet, dass** die Maschine im Fall einer Verpackung der Charge von Produkten (1) in einem Zuschnitt des "Wrap-Around"-Typs eine mit einem Roboter (13) oder Sonstigem verbundene Schubvorrichtung (14) aufweist, die einen einfachen Quertransport der Charge von Produkten (1) zu einem Verpackungsförderer (16), an dem der Zuschnitt angebracht ist, ermöglicht und die am Rand der Ablagestation (6) angeordnet ist.

## Claims

1. A machine for grouping products comprising a feed conveyor (2), on which said products arrive in a single line and spaced apart, said machine comprising rake-shaped collectors (4) arranged transversely to the longitudinal axis (xx') of the arrival of the products (1), said collectors (4) following a cyclical polygonal movement: - to capture said products one after another, - then to move them onto a laterally positioned table (3) on which the batch of products is collected for casing, and
- finally to return to the starting point, **characterized in that**
said collectors (4) are vertically offset relative to each other and are connected to runners (8) arranged transversely to said longitudinal axis (xx'), said runners (8) each comprising a mobile carriage (7) which supports a collector (4) by means of an actuator (11), said carriages (7) and actuators (11) being superimposed and controlled by a logic controller (17) to direct said cyclical polygonal movement of each collector (4).

2. The grouping machine according to claim 1, **characterized in that** it comprises a means for controlling the position of the products (1) on the feed conveyor (2), said means consisting of a sensor (12) connected to the logic controller (17) in order to coordinate the movements of the carriages (7) and their collectors (4) with the position of said products, at the capture station (5).

3. The grouping machine according to claim 1, **characterized in that** each collector (4) is movable in a horizontal mid-plane which passes through the axis of its actuator (11).

4. The grouping machine according to claim 1, **characterized in that** the logic controller (17) directing the collectors (4) comprises a programming interface offering the possibility of selecting a number of collector(s) (4) adapted to the different grouping modes and/or types of products (1) to be grouped.

5. The grouping machine according to claim 1, **characterized in that** the programming interface offers the possibility of selecting at least one, two, three, or four collectors (4), or pairs of collectors (4), or of selecting a collector (4) and a pair of collectors (4).

6. The grouping machine according to claim 1, **characterized in that** each collector (4) consists of one or more rakes which are spaced apart and superimposed, in a manner that multiplies the contacts with the products (1) in order to improve their stability during their transfer between the feed conveyor (2) and the depositing station (6) at the collection table (3).

7. The grouping machine according to claim 1, **characterized in that** the collector (4) comprises cells of a depth that can accept one or more products in order to group them into a batch.

8. The grouping machine according to claim 1, **characterized in that**, for grouping products (1) having a non-circular cross-section, such as an ovoid bottle, each collector (4) comprises cells (4i) arranged obliquely to the longitudinal axis (xx') of the feed conveyor (2), the axis (20) of said cells (4i) forming a non-zero angle (a) with the longitudinal axis (xx') of the feed conveyor (2), said angle being between 10 and 45° for example.

9. The grouping machine according to claim 8, **characterized in that**, in the case of collectors (4) with cells (4i) in the oblique arrangement, the actuators (11) are arranged obliquely, parallel to the axis (20) of said cells to allow releasing the batch of products (1) without jostling said products.

10. The grouping machine according to claim 1, **characterized in that** it comprises at least one robot (13) for handling the products (1), said robot (13) having a grasping head (14) able to collect at least one batch of products (1) at the depositing station (6) so they can be cased, said robot (13) also allowing grouping each batch deposited by the collector (4) in order to form a total batch consisting of a number of products (1) likely to fill a box directly.

11. The grouping machine according to claim 1, **characterized in that** it includes a collection table (3) which comprises a fixed plane on which the products (1) captured by each collector (4) are placed as they are moved by said collector (4), said fixed plane comprising an arrangement at the depositing station (6), such as dimples or bumps for example, for retaining the batch of captured products (1) as said collector (4) withdraws, meaning at the time said products (1) are released at said depositing station (6).

12. The grouping machine according to claim 1, **characterized in that**, for the case of a batch of products (1) to be cased in a wrap-around blank, the machine comprises a push tool (14) associated with a robot (13) or other means, to enable a simple transverse transfer of said batch of products (1) to a casing conveyor (16) on which said blank is installed and which is arranged along the edge of the depositing station (6).
